# EUROPEAN PATENT APPLICATION

(11) **EP 4 443 085 A1**
(43) Date of publication of application: **09.10.2024**
(21) Application number: 22900553.3
(22) Date of filing: 30.11.2022
(51) Int. Cl.: F25D 23/12, B01D 53/32, B01D 53/78, F25D 17/04

(54) **LIQUID STORAGE DEVICE AND ELECTROLYTIC DEOXIDIZATION SYSTEM HAVING SAME, AND REFRIGERATOR**

(30) Priority: 03.12.2021 CN 202111468134; 03.12.2021 CN 202111467792
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: HUANG, Lulu, Qingdao, Shandong, 266101 (CN); FEI, Bin, Qingdao, Shandong 266101 (CN); MIAO, Jianlin, Qingdao, Shandong 266101 (CN)
(74) Representative: Winter, Brandl - Partnerschaft mbB
(86) International application number: PCT/CN2022/135570
(87) International publication number: WO 2023/098749

(57) **Abstract**

A liquid storage device and an electrochemical deoxygenation system and refrigerator having the same are disclosed. The liquid storage device includes: a liquid storage container forming a first liquid storage space inside; and a filtering mechanism having a housing and a filtering portion, with the housing forming a second liquid storage space communicating with the first liquid storage space, the filtering portion being arranged in the second liquid storage space and used for dissolving specific substance components in the gas from the external environment into the second liquid storage space, so as to enter the first liquid storage space for recovery and use. This liquid storage device has a filtering and recovery function, enabling the specific substance components in the gas to be separated and recovered, thereby reducing or avoiding pollution caused by gas emissions, while also improving resource utilization efficiency.

## Description

### TECHNICAL FIELD

The present disclosure relates to preservation equipment, particularly to a liquid storage device and an electrochemical deoxygenation system and refrigerator having the same.

### BACKGROUND

For some reaction devices, such as electrochemical reaction devices used to reduce the oxygen inside a refrigerator through electrochemical reactions, the process of the electrochemical reaction requires the participation of an electrolytic solution, and the reaction process generates gases that need to be discharged into the external environment.

During the reaction process, due to the generation of a large amount of heat, the electrolytic solution will evaporate when heated, which leads to the possibility that the gas discharged from the reaction container may carry a small amount of electrolytic solution vapor. Most electrolytic solutions are acidic or alkaline solutions and are corrosive. If the gases produced by the reaction device are directly discharged into the air without treatment, it may cause air pollution and pose health risks.

In addition, when the gases generated by the reaction device carry electrolytic solution vapor, the electrolytic solution will slowly be lost, resulting in resource waste and increased production costs.

For some items, such as fruits and vegetables, to extend their shelf life and ensure high freshness, they generally need to be stored in a low-oxygen, low-temperature environment.

To create a low-oxygen, low-temperature preservation atmosphere, an electrochemical deoxygenation device can be installed in a refrigerator. The electrochemical deoxygenation device can consume oxygen in the storage space through electrochemical reactions. Since electrochemical reactions usually occur in electrolytic solutions and consume the components of the electrolytic solution, it is necessary to timely add liquid to the electrochemical deoxygenation device to maintain the normal progress of the electrochemical reactions.

Electrolytic solutions are generally acidic or alkaline liquids and are corrosive. If the electrolytic solution is manually added, there are inevitable safety risks. Furthermore, if liquid is added to the electrochemical deoxygenation device from outside, the components of the electrochemical deoxygenation device and its surroundings may need to be disassembled, leading to a complex operation process and increased risk of damage to the device.

The information disclosed in the background technology section is only for enhancing the understanding of the background technology of the present application and may include technologies that do not constitute prior art known to those skilled in the art.

### SUMMARY

One object of the present disclosure is to overcome at least one technical defect in the prior art and to provide a liquid storage device, an electrochemical deoxygenation system having the same, and a refrigerator having the same.

An additional object of one aspect of the present disclosure is to provide a liquid storage device with filtering and recycling functions, allowing specific substance components in the gas to be separated and recycled, thereby reducing or avoiding pollution caused by gas discharge while improving resource utilization efficiency.

A further object of one aspect of the present disclosure is to make the recovery process of the liquid storage device simply and efficient.

Another object of one aspect of the present disclosure is to obtain an optimal filtering and purification effect with a compact and simple structure of the liquid storage device.

Yet another object of one aspect of the present disclosure is to solve the problems of liquid replenishment difficulties and electrolytic solution loss in the deoxygenation process of refrigerators.

A further object of another aspect of the present disclosure is to provide an electrochemical deoxygenation system integrating deoxygenation and liquid replenishment functions, reducing the difficulty of liquid replenishment for the electrochemical deoxygenation device and improving the deoxygenation effect.

Another further object of another aspect of the present disclosure is to automate the liquid replenishment process of the electrochemical deoxygenation system through mechanical structures, reducing electronic control costs and improving the degree of automation.

Yet another object of another aspect of the present disclosure is to reduce the corrosiveness of the gases discharged by the electrochemical deoxygenation device, thereby reducing the adverse environmental impact of the deoxygenation process.

Another further object of another aspect of the present disclosure is to recycle specific substance components in the gases discharged by the electrochemical deoxygenation device, thereby reducing resource consumption in the deoxygenation process.

According to one aspect of the present disclosure, a liquid storage device with filtering and recycling functions is provided, comprising: a liquid storage container, forming a first liquid storage space inside; and a filtering mechanism, having a housing and a filtering portion, wherein the housing forms a second liquid storage space communicating with the first liquid storage space, and the filtering portion is arranged in the second liquid storage space and used for dissolving specific substance components in gases from the external environment into the second liquid storage space, so that specific substance components in gases enter the first liquid storage space for recovery.

Optionally, the housing is inserted into the first liquid storage space, and its bottom is provided with a liquid outlet hole communicating with the first liquid storage space, allowing the liquid in the second liquid storage space to flow to the first liquid storage space.

Optionally, the housing is also provided with an air inlet hole for introducing gases from the external environment; and the filtering portion is an air guide tube inserted into the second liquid storage space through the air inlet hole and extending to a bottom section of the second liquid storage space, guiding the gases from the external environment to the bottom section of the second liquid storage space so that specific substance components in the gases from the external environment are dissolved in the second liquid storage space during the gas ascent.

Optionally, the air guide tube is a straight tube; or the air guide tube is a vertical hook-shaped tube, having a straight tube section extending to the bottom section of the second liquid storage space and a bent tube section extending upward from an end of the straight tube section, with the end of the bent tube section slightly higher than the end of the straight tube section, guiding the gases flowing through it upward.

Optionally, the housing is also provided with an air outlet hole at a top of the housing, for discharging gases that have flowed through the air guide tube and the second liquid storage space and have been separated from the specific substance components.

Optionally, the housing comprises a first compartment with a top opening and a first cover closing the top opening of the first compartment, and the air inlet hole and the air outlet hole are spaced apart on the first cover.

Optionally, the liquid storage container comprises a second compartment with a top opening and a second cover closing the top opening of the second compartment; and the second cover is provided with an installation opening; a wall of the installation opening extends upward to form a hollow cylindrical external threaded interface; the first cover has a sealing cover plate above the first compartment and an annular internal threaded interface extending downward from an outer edge of the sealing cover plate, the annular internal threaded interface being screwed to the external threaded interface, so that the first cover is detachably connected to the second cover; and the first compartment extends downward from a lower surface of the sealing cover plate, passes through the external threaded interface, and is inserted into the first liquid storage space.

Optionally, the second cover is also provided with a liquid filling port, a wall of which extends downward to form a liquid filling groove; a part of the wall of the liquid filling groove extends downward obliquely, making the bottom of the liquid filling groove form a gradually narrowing opening.

Optionally, a bottom section of the liquid storage container is provided with a liquid supply port for outputting liquid to the external environment.

According to another aspect of the present disclosure, an electrochemical deoxygenation system for a refrigerator is provided, comprising:

an electrochemical deoxygenation device, having a reaction container, the interior of which forms a reaction site for consuming oxygen through electrochemical reactions; and the reaction container is provided with a liquid replenishment port; and the liquid storage device as described above, wherein the liquid storage container of the liquid storage device is provided with a liquid supply port communicating with the liquid replenishment port for supplying liquid to the reaction container.

Optionally, the liquid supply port is located at the bottom section of the liquid storage container, and the liquid replenishment port is located at a top section of the reaction container; and the liquid supply port is higher than the liquid replenishment port.

Optionally, the electrochemical deoxygenation system further comprises:
a liquid delivery pipe, one end of which communicates with the liquid supply port, and the other end of which communicates with the liquid replenishment port, for guiding liquid from the liquid supply port to the liquid replenishment port.

Optionally, the reaction container is also provided with an exhaust port for allowing gases generated in the reaction container to be discharged into the interior space of the housing of the filtering mechanism; and the filtering portion is used to dissolve specific substance components in the gases from the exhaust port into the interior space of the housing, so that specific substance components enter the first liquid storage space for recovery.

Optionally, the housing is provided with an air inlet hole communicating the exhaust port with the interior space of the housing; and the electrochemical deoxygenation system further comprises an air delivery pipe, one end of which communicates with the exhaust port, and the other end of which communicates with the air inlet hole, for guiding gases from the exhaust port to the air inlet hole.

Optionally, the filtering portion is an air guide tube inserted into the interior space of the housing through the air inlet hole and extending to a bottom section of the housing, for guiding gases from the exhaust port to the bottom section of the housing, so that specific substance components in the gases from the exhaust port are dissolved in the interior space of the housing during the ascent; and the housing is also provided with an air outlet hole, spaced apart from the air inlet hole at a top of the housing, for discharging gases that have flowed through the air guide tube and the interior space of the housing and have been separated from the specific substance components.

Optionally, the housing is inserted into the liquid storage space, and its bottom is provided with a liquid outlet hole communicating with the first liquid storage space, allowing the liquid in the housing to flow to the liquid storage container.

Optionally, the electrochemical deoxygenation system further comprises:
a liquid level switch, arranged in the reaction container, having a switch body, for opening and closing the liquid replenishment port according to the liquid level in the reaction container, to allow or prevent the electrolytic solution in the liquid storage container from flowing through the liquid supply port and the liquid replenishment port into the reaction container sequentially.

Optionally, the liquid level switch further comprises a float, fixedly connected to the switch body or integrated with the switch body, and rotatably arranged around an axis, for achieving upward or downward movement through rotation around the axis in the reaction container, thereby driving the switch body to move.

According to yet another aspect of the present disclosure, a refrigerator is provided, comprising:
the electrochemical deoxygenation system as described above, wherein the electrochemical deoxygenation device is in airflow communication with a storage space of the refrigerator, so that the electrochemical deoxygenation device consumes the oxygen in the storage space of the refrigerator through electrochemical reactions.

The liquid storage device with filtering and recycling functions and the refrigerator having the same provided by the present disclosure, due to the filtering mechanism of the liquid storage device, wherein the housing of the filtering mechanism forms a second liquid storage space communicating with the first liquid storage space of the liquid storage container, and the filtering portion of the filtering mechanism is used to dissolve specific substance components in the gases from the external environment into the second liquid storage space, so that specific substance components in the gases enter the first liquid storage space for recovery, therefore, the present disclosure provides a liquid storage device with filtering and recycling functions, allowing specific substance components in the gases to be separated and recycled, thereby reducing or avoiding pollution caused by gas discharge while improving resource utilization efficiency.

Furthermore, the liquid storage device with filtering and recycling functions and the refrigerator having the same provided by the present disclosure, since the housing is inserted into the first liquid storage space, and is connected to the first liquid storage space through a liquid outlet hole at the bottom of the housing, the liquid in the second liquid storage space can rely on gravity to flow downward through the liquid outlet hole and return to the first liquid storage space, making the recovery process of the liquid storage device simple and effective.

Furthermore, the liquid storage device with filtering and recycling functions and the refrigerator having the same provided by the present disclosure, since the filtering portion is an air guide tube, inserted into the second liquid storage space through the air inlet hole of the housing, and extending to the bottom section of the second liquid storage space, guiding the gases from the external environment to the bottom section of the second liquid storage space, the gases exiting the air guide tube can fully contact the liquid in the second liquid storage space during the ascent, allowing specific substance components in the gases to dissolve in the second liquid storage space, thus enabling the liquid storage device to achieve optimal filtering and purification effects with a compact and simple structure.

Furthermore, the liquid storage device with filtering and recycling functions and the refrigerator having the same provided by the present disclosure, since the liquid storage device has filtering and recycling functions and can output liquid to the external environment through a liquid supply port, when the liquid storage device is combined with the electrochemical deoxygenation device of the refrigerator, the gases discharged by the electrochemical deoxygenation device can be guided to the second liquid storage space, allowing specific substance components in the gases to be separated and recycled, and when the electrolytic solution in the electrochemical deoxygenation device is insufficient, the liquid in the first liquid storage space can be used for replenish the electrochemical deoxygenation device, thereby solving the problems of liquid replenishment difficulties and electrolytic solution loss in the deoxygenation process of the refrigerator.

The electrochemical deoxygenation system for a refrigerator and the refrigerator having the same provided by the present disclosure, since the electrochemical deoxygenation system has a liquid storage device for supplying liquid to the reaction container of the electrochemical deoxygenation device, allows the electrochemical deoxygenation system of the present disclosure to integrate deoxygenation and liquid replenishment functions, enabling the reaction container to be replenished with liquid using its own liquid storage device, reducing the difficulty of liquid replenishment for the electrochemical deoxygenation device, making the liquid replenishment process safer, more effective, timely, and intelligent, and further ensuring the deoxygenation effect of the electrochemical deoxygenation device.

Furthermore, the electrochemical deoxygenation system for a refrigerator and the refrigerator having the same provided by the present disclosure, since the liquid supply port of the liquid storage container is higher than the liquid replenishment port of the reaction container, the liquid from the liquid storage container can enter the reaction container by gravity, making the liquid replenishment process of the electrochemical deoxygenation system automatic through mechanical structures, reducing electronic control costs and improving the degree of automation.

Furthermore, the electrochemical deoxygenation system for a refrigerator and the refrigerator having the same provided by the present disclosure, since the filtering mechanism can dissolve specific substance components in the gases discharged by the electrochemical deoxygenation device into the interior space of the housing, the gases to be discharged are filtered, reducing the corrosiveness of the gases discharged by the electrochemical deoxygenation device and reducing the adverse environmental impact of the deoxygenation process.

Furthermore, the electrochemical deoxygenation system for a refrigerator and the refrigerator having the same provided by the present disclosure, since the housing of the filtering mechanism is connected to the liquid storage space, the specific substance components dissolved in the housing can enter the liquid storage space, allowing specific substance components in the gases discharged by the electrochemical deoxygenation device to be recycled, reducing resource consumption in the deoxygenation process.

From the following detailed description of specific embodiments of the present disclosure in conjunction with the accompanying drawings, those skilled in the art will better understand the above and other objects, advantages, and features of the present disclosure.

### BRIEF DESCRIPTION OF THE DRAWINGS

The following detailed description of some specific embodiments of the present disclosure will be made with reference to the accompanying drawings by way of example rather than limitation. The same reference numerals in the drawings denote the same or similar parts or sections. It should be understood by those skilled in the art that these drawings are not necessarily drawn to scale. In the drawings:
FIG. 1 is a schematic structural diagram of a liquid storage device with filtering and recycling functions according to one embodiment of the present disclosure;
FIG. 2 is a schematic perspective view of the liquid storage device shown in FIG. 1;
FIG. 3 is a schematic exploded view of the liquid storage device shown in FIG. 1;
FIG. 4 is a schematic structural diagram of the filtering mechanism of the liquid storage device shown in FIG. 1;
FIG. 5 is a schematic exploded view of the filtering mechanism of the liquid storage device shown in FIG. 4;
FIG. 6 is a schematic structural diagram of the second cover of the liquid storage container of the liquid storage device shown in FIG. 3;
FIG. 7 is a schematic diagram of the filtering and recycling process of the liquid storage device shown in FIG. 1;
FIG. 8 is a schematic block diagram of a refrigerator according to one embodiment of the present disclosure;
FIG. 9 is a schematic structural diagram of a reaction system according to one embodiment of the present disclosure;
FIG. 10 is a schematic structural diagram of the liquid level switch of the reaction system according to one embodiment of the present disclosure;
FIG. 11 is a schematic structural diagram of an electrochemical deoxygenation system for a refrigerator according to one embodiment of the present disclosure;
FIG. 12 is a schematic structural diagram of the electrochemical deoxygenation device of the electrochemical deoxygenation system for a refrigerator according to one embodiment of the present disclosure;
FIG. 13 is a schematic exploded view of the electrochemical deoxygenation device of the electrochemical deoxygenation system for a refrigerator shown in FIG. 12;
FIG. 14 is a schematic block diagram of a refrigerator according to another embodiment of the present disclosure.

### DETAILED DESCRIPTION

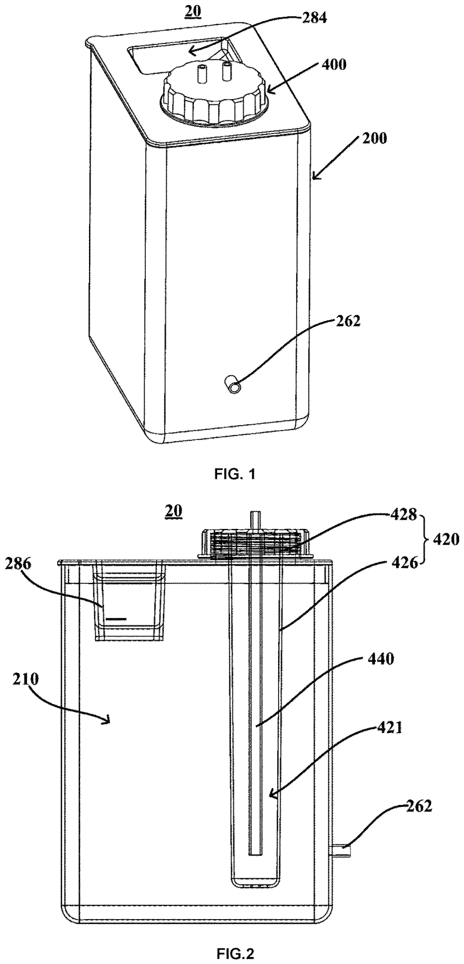

FIG. 1 is a schematic structural diagram of a liquid storage device 20 with filtering and recycling functions according to one embodiment of the present disclosure. The liquid storage device 20 of this embodiment has filtering and recycling functions, which can separate and recycle specific substance components from gases for utilization.

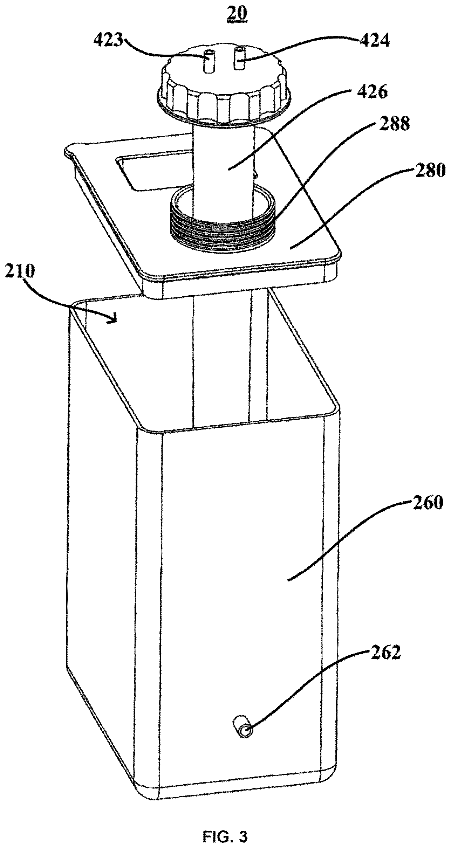

FIG. 2 is a schematic perspective view of the liquid storage device 20 shown in FIG. 1. FIG. 3 is a schematic exploded view of the liquid storage device 20 shown in FIG. 1. The liquid storage device 20 generally includes a liquid storage container 200 and a filtering mechanism 400.

The liquid storage container 200 forms a first liquid storage space 210 inside. The first liquid storage space 210 is used for storing liquids, such as electrolytic solutions containing specific components or water, but is not limited to this.

The filtering mechanism 400 has a housing 420 and a filtering portion 440, wherein the housing 420 forms a second liquid storage space 421 communicating with the first liquid storage space 210. The filtering portion 440 is arranged in the second liquid storage space 421 and is used for dissolving specific substance components in gases from the external environment into the second liquid storage space 421, so that dissolving specific substance components in gases enter the first liquid storage space 210 for recovery. The second liquid storage space 421 can also be used for storing liquids, such as electrolytic solutions containing specific components or water. Dissolving specific substance components in the gases from the external environment into the second liquid storage space 421 means dissolving them in the liquid stored in the second liquid storage space 421.

In this embodiment, the specific substance components are water-soluble substances. In some optional embodiments, the liquid components stored in the first liquid storage space 210 and the second liquid storage space 421 can be adjusted according to the physical and chemical properties of the specific substance components to be separated.

Since the second liquid storage space 421 communicates with the first liquid storage space 210, the specific substance components in the gases from the external environment dissolved in the second liquid storage space 421 can enter the first liquid storage space 210 for recovery.

The liquid storage device 20 of this embodiment, due to the filtering mechanism 400, wherein the housing 420 of the filtering mechanism 400 forms a second liquid storage space 421 communicating with the first liquid storage space 210 of the liquid storage container 200, and the filtering portion 440 of the filtering mechanism 400 is used for dissolving specific substance components in the gases from the external environment into the second liquid storage space 421, so that specific substance components in the gases from the external environment enter the first liquid storage space for recovery, therefore, the present disclosure provides a liquid storage device 20 with filtering and recycling functions, allowing specific substance components in the gases to be separated and recycled, thereby reducing or avoiding pollution caused by gas discharge while improving resource utilization efficiency.

In some optional embodiments, the housing 420 is inserted into the first liquid storage space 210. For example, the liquid storage container 200 can be generally rectangular, and the housing 420 can be inserted into the first liquid storage space 210 as an inner sleeve. The shapes of the liquid storage container 200 and the housing 420 mentioned here are merely illustrative and can be easily extended by those skilled in the art, so they are not listed one by one here.

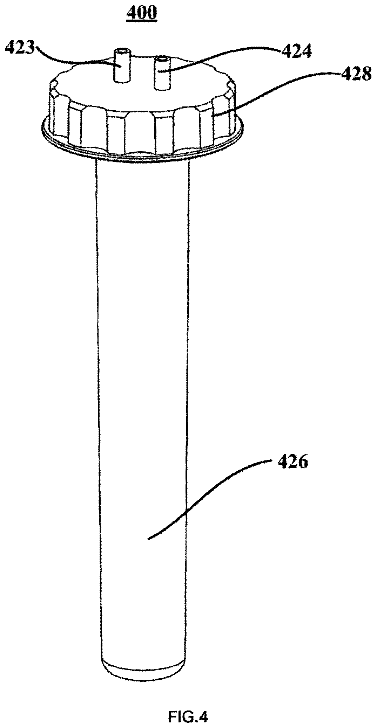

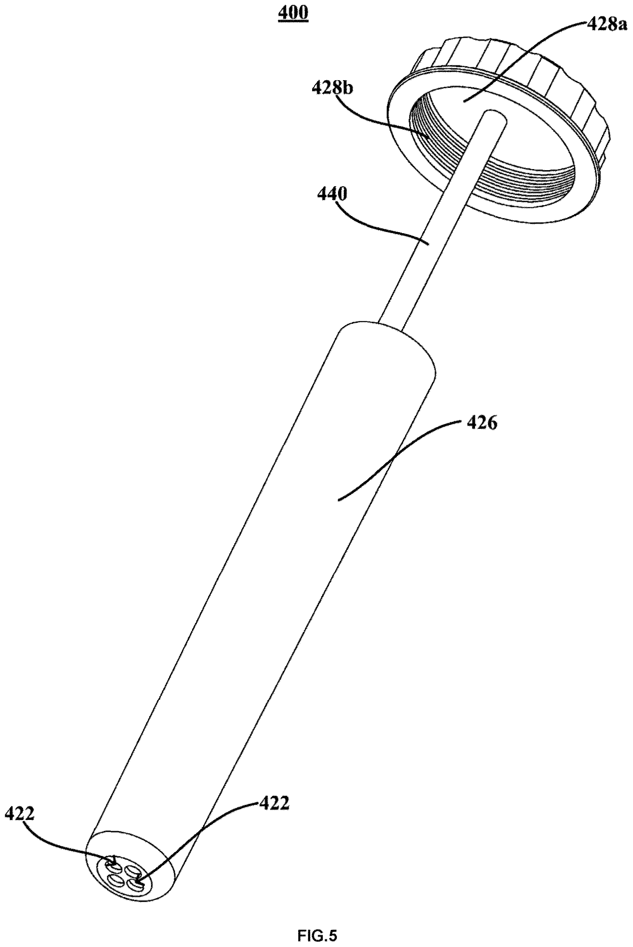

FIG. 4 is a schematic structural diagram of the filtering mechanism 400 of the liquid storage device 20 shown in FIG. 1. FIG. 5 is a schematic exploded view of the filtering mechanism 400 of the liquid storage device 20 shown in FIG. 4.

A bottom of the housing 420 is provided with a liquid outlet hole 422 communicating with the first liquid storage space 210, allowing the liquid in the second liquid storage space 421 to flow to the first liquid storage space 210. The liquid outlet hole 422 can act as a "window" for material exchange between the two liquid storage spaces. The liquid outlet hole 422 can keep the liquid level of the first liquid storage space 210 consistent with the liquid level of the second liquid storage space 421 and make it easy for the liquid in the second liquid storage space 421 to diffuse into the first liquid storage space 210.

Since the housing 420 is arranged in the first liquid storage space 210 and communicates with the first liquid storage space 210 through the liquid outlet hole 422 at the bottom of the housing 420, the liquid in the second liquid storage space 421 can flow downward through the liquid outlet hole 422 by gravity and return to the first liquid storage space 210, making the recovery process of the liquid storage device 20 simple and effective.

In some optional embodiments, the housing 420 is also provided with an air inlet hole 423 for introducing gases from the external environment. The air inlet hole 423 can be provided at a top of the housing 420, for example, on a cover of the housing 420, which can prevent the liquid stored in the second liquid storage space 421 from leaking. In some optional embodiments, the air inlet hole 423 can also be provided on a side wall of the housing 420, higher than the normal liquid level of the second liquid storage space 421.

The filtering portion 440 is an air guide tube inserted into the second liquid storage space 421 through the air inlet hole 423 and extending to a bottom section of the second liquid storage space 421, guiding the gases from the external environment to the bottom section of the second liquid storage space 421, so that the specific substance components in the gases from the external environment are dissolved in the second liquid storage space 421 during the gas ascent. Extending the air guide tube to the bottom section of the second liquid storage space 421 allows the air guide tube to deliver the gases from the external environment to the depth of the liquid stored in the second liquid storage space 421, thus extending the flow path of the gas in the second liquid storage space 421.

Since the filtering portion 440 is an air guide tube, and it is inserted into the second liquid storage space 421 through the air inlet hole 423 of the housing 420 and extends to the bottom section of the second liquid storage space 421, guiding the gases from the external environment to the bottom section of the second liquid storage space 421, the gases exiting the air guide tube can fully contact the liquid in the second liquid storage space 421 during the ascent, allowing the specific substance components in the gases to dissolve in the second liquid storage space 421, thus enabling the liquid storage device 20 to achieve optimal filtering and purification effects with a compact and simple structure.

The air guide tube of this embodiment can be a straight tube with both ends open to facilitate gas entry or exit, having a simple structure and providing an optimal gas guiding effect.

In some optional embodiments, the shape of the air guide tube can be changed to a vertical hook-shaped tube, having a straight tube section extending to the bottom section of the second liquid storage space 421 and a bent tube section extending upward from an end of the straight tube section. An end of the bent tube section is slightly higher than the end of the straight tube section, guiding the gases flowing through it upward.

In other words, the air guide tube of this embodiment can be in the shape of a vertical hook, with the straight tube section resembling an umbrella rod and the bent tube section resembling an umbrella handle connected to the end of the umbrella rod. Extending the bent tube end upward from the end of the straight tube section guides the gases exiting the air guide tube to flow upward, making the gas flow direction more definite. The end of the bent tube section being slightly higher than the end of the straight tube section means that the end of the bent tube section is still in the bottom section of the second liquid storage space 421, which does not significantly shorten the flow path of the gas during the dissolution process.

In some optional embodiments, the housing 420 is also provided with an air outlet hole 424 for discharging gases that have flowed through the air guide tube and the second liquid storage space 421 and have been separated from specific substance components. The air outlet hole 424 is located at the top of the housing 420, for example, on the cover of the housing 420. The air outlet hole 424 is used to discharge filtered gases to the external environment, for example, to the air in the external environment. In some embodiments, the air inlet hole 423 and the air outlet hole 424 can be circular openings. The air inlet hole 423 and the air outlet hole 424 of this embodiment can be tubular through-holes. The wall of the air inlet hole 423 extends downward continuously and inserts into the second liquid storage space 421, acting as an air guide tube. In some embodiments, an air outlet pipe can be connected to the air outlet hole 424 for guiding gases.

In some optional embodiments, the housing 420 can be integrally formed. In other optional embodiments, the housing 420 can be connected by multiple different parts. For example, the housing 420 can include a first compartment 426 with a top opening and a first cover 428 closing the top opening of the first compartment 426. The air inlet hole 423 and the air outlet hole 424 are spaced apart on the first cover 428. The first compartment 426 can be a straight tube with a diameter larger than that of the air guide tube. The top end of the first compartment 426 is open and is sealedly connected to the first cover 428. The bottom end of the first compartment 426 is closed and is provided with the aforementioned liquid outlet hole 422, which can be at least one.

The air inlet hole 423, along with the air guide tube and the air outlet hole 424, is covered by the first compartment 426, forming a sleeve structure. The bottom end of the air guide tube is higher than the bottom end of the first compartment 426 to prevent the gases exiting the air guide tube from escaping out of the first compartment 426.

Setting the air inlet hole 423 and the air outlet hole 424 on the cover of the housing 420 can reduce the difficulty of opening holes, simplify the manufacturing process, and improve the efficiency of gas discharge.

In some optional embodiments, the liquid storage container 200 can be integrally formed, which helps to improve the sealing effect of the liquid storage container 200 and prevent liquid leakage. In other optional embodiments, the liquid storage container 200 can be connected by multiple different parts. For example, the liquid storage container 200 can include a second compartment 260 with a top opening and a second cover 280 closing the top opening of the second compartment 260. The second compartment 260 can be an open rectangular water tank with a volume larger than that of the first compartment 426.

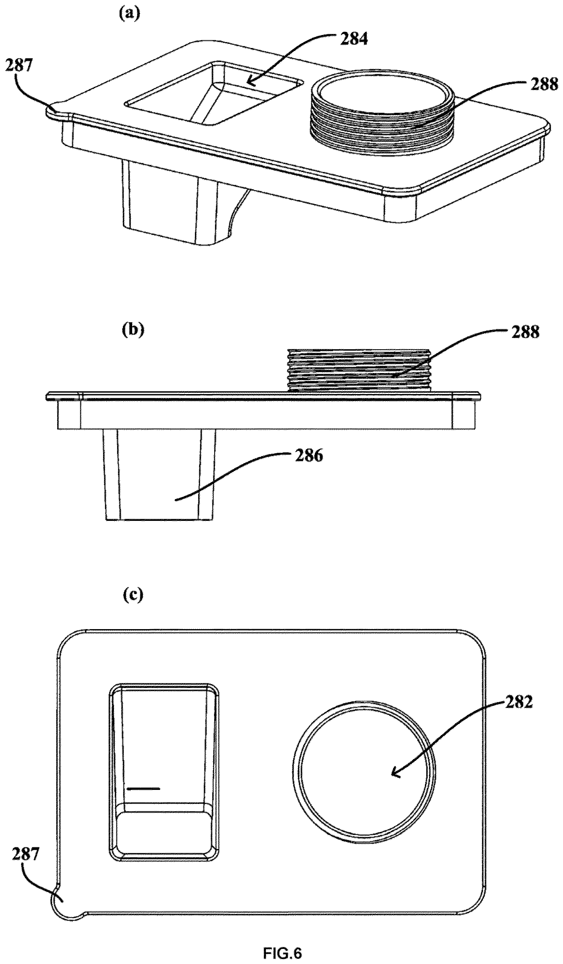

FIG. 6 is a schematic structural diagram of the second cover 280 of the liquid storage container 200 of the liquid storage device 20 shown in FIG. 3, wherein FIG. 6(a) is a perspective view, FIG. 6(b) is a front view, and FIG. 6(c) is a top view.

The second cover 280 is provided with an installation opening 282. A wall of the installation opening 282 extends upward to form a hollow cylindrical external threaded interface 288. Since the external threaded interface 288 extends upward from the wall of the installation opening 282, an upper edge of the external threaded interface 288 is higher than an upper surface of the second cover 280 and also higher than an upper edge of a liquid filling groove 286 mentioned below. This can control the highest liquid level during the liquid filling process below the upper edge of the external threaded interface 288.

The first cover 428 has a sealing cover plate 428a above the first compartment 426 and an annular internal threaded interface 428b extending downward from an outer edge of the sealing cover plate 428a. The sealing cover plate 428a is used to cover the top opening of the first compartment 426. The annular internal threaded interface 428b is screwed to the external threaded interface 288, making the first cover 428 detachably connected to the second cover 280. In other words, the annular internal threaded interface 428b is used to connect the first cover 428 to the second cover 280.

The first compartment 426 extends downward from a lower surface of the sealing cover plate 428a, passes through the external threaded interface 288, and is inserted into the first liquid storage space 210.

By screwing the first cover 428 to the second cover 280 to close the installation opening 282, the installation and fixation process of the filtering mechanism 400 can be simplified, achieving one-step installation, while also allowing the first compartment 426 to function as an "air isolation tube."

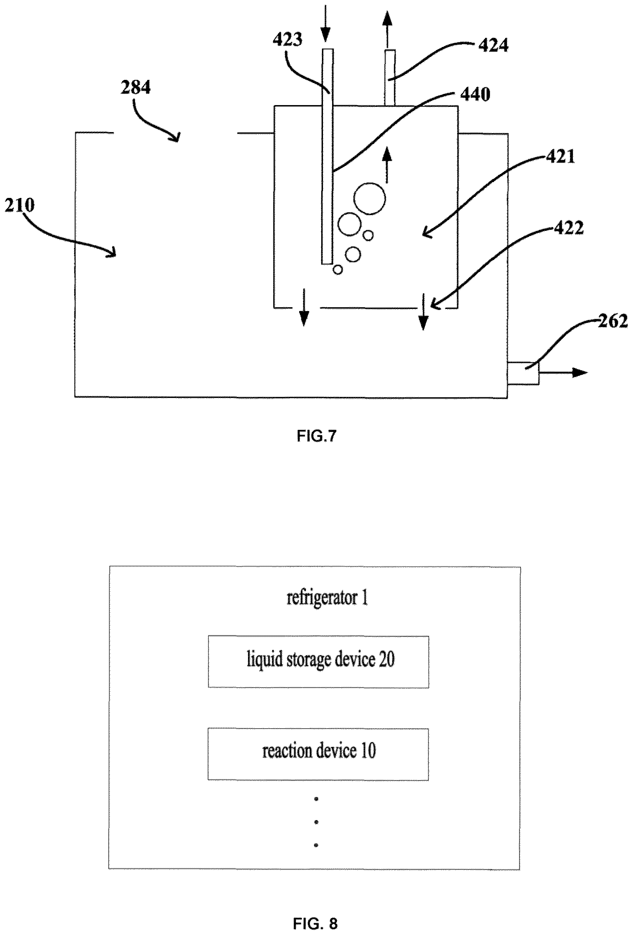

FIG. 7 is a schematic diagram of the filtering and recycling process of the liquid storage device 20 shown in FIG. 1.Arrows in the figure show the direction of gas flow or liquid flow. Due to the limitation of the "air isolation tube," the gases exiting the air guide tube can only rise in the form of bubbles inside the first compartment 426 until they reach the air outlet hole 424 on the first cover 428 above the first compartment 426 and are discharged, thus completing the filtering process. In some optional embodiments, the aforementioned screwing fastening installation method can also be changed to interference fit or sealing ring connection, as long as the sealing is ensured without water leakage or air leakage.

When the gases from the external environment contain soluble acidic or alkaline substances, these specific substance components are filtered and retained in the first compartment 426 and gradually diffuse into the liquid in the second compartment 260 through the liquid outlet hole 422 at the bottom of the first compartment 426. The first compartment 426 can serve as a replenishment compartment, and the liquid inside can be transported to the reaction site again for reuse through replenishment.

In some optional embodiments, the second cover 280 can be provided with a liquid filling port 284, and a wall of the liquid filling port 284 extends downward to form a liquid filling groove 286. Since the liquid filling groove 286 extends downward from the upper surface of the second cover 280 and the external threaded interface 288 extends upward from the upper surface of the second cover 280, when adding liquid to the second compartment 260 through the liquid filling port 284, even if the liquid filling process causes overflow in the second compartment 260, the liquid level during overflow will not exceed the external threaded interface 288.

A part of the wall of the liquid filling groove 286 extends obliquely downward, making a bottom of the liquid filling groove 286 form a gradually narrowing opening. In other words, the liquid filling groove is an inclined through-hole with a certain depth, making it convenient for users to observe the liquid level during filling. The inclined downward extending wall of the groove has liquid level markings to indicate the liquid level during the filling process. For example, the liquid level marking can be designed as a "maximum liquid level line" to indicate to users that the liquid is full.

A bottom section of the liquid storage container 200 is provided with a liquid supply port 262 for outputting liquid to the external environment. The liquid supply port 262 can be provided at the bottom section of the second compartment 260. In other words, while storing liquid, the liquid storage container 200 can also use the liquid supply port 262 to deliver liquid to the external environment for use, which helps optimize the production process and improve production efficiency. For example, the liquid supply port 262 can be connected through a pipeline to an electrochemical deoxygenation device for performing electrochemical reactions and replenishing the electrochemical deoxygenation device with liquid, such as electrolytic solution or water.

Providing the liquid supply port 262 at the bottom section of the second compartment 260 allows the liquid in the second compartment 260 to flow out automatically by gravity, which helps improve the automation of the liquid supply process.

In some optional embodiments, an edge of the second cover 280 has a protrusion 287 for applying force. The user can apply force to the second cover 280 by grabbing it, thus achieving the disassembly and assembly process between the second cover 280 and the second compartment 260.

The periphery of the closing section between the second cover 280 and the second compartment 260 can be provided with an elastic sealing ring, facilitating sealing by pressing between the second cover 280 and the second compartment 260 to prevent leakage from the second compartment 260.

FIG. 8 is a schematic block diagram of a refrigerator 1 according to one embodiment of the present disclosure. The refrigerator 1 has a reaction device 10. The refrigerator 1 generally includes a liquid storage device 20 as described in any of the above embodiments. The reaction device 10 can be an electrochemical deoxygenation device for consuming oxygen inside the refrigerator 1 through electrochemical reactions to reduce oxygen levels. In some optional embodiments, the reaction device 10 can be replaced with other devices as needed, such as a deodorizing reaction device 10.

The electrochemical deoxygenation device can include a reaction container 500, which forms a site for electrochemical reactions inside. The reaction container 500 can be provided with electrochemical reaction elements (anode plate, cathode plate, etc.) and an electrolytic solution, such as sodium hydroxide solution, inside. The anode plate and the cathode plate are respectively immersed in the electrolytic solution.

The cathode plate is in airflow communication with the internal space of a storage compartment of the refrigerator 1. When powered, the cathode plate is used to consume the oxygen in the storage compartment through electrochemical reactions. For example, the oxygen in the air can undergo a reduction reaction at the cathode plate, namely: O₂ + 2H₂O + 4e⁻ → 4OH⁻.

The anode plate and the cathode plate are arranged in the reaction container 500 at intervals. When powered, the anode plate is used to provide reactants (e.g., electrons) to the cathode through electrochemical reactions and generate oxygen. The OH⁻ generated by the cathode plate can undergo an oxidation reaction at the anode plate, generating oxygen, namely: 4OH⁻ → O₂+ 2H₂O + 4e⁻. The oxygen can be discharged through an exhaust port 510 on the reaction container 500.

The filtering portion 440 is used to dissolve specific substance components in the gases from the electrochemical deoxygenation device of the refrigerator 1 into the second liquid storage space 421. For example, the exhaust port 510 of the reaction container 500 communicates with the air inlet hole 423 of the housing 420, so that the oxygen generated in the reaction container 500 enters the air guide tube and is filtered, allowing the electrolytic solution carried by the oxygen to be retained in the second liquid storage space 421.

The first liquid storage space 210 is used to supply liquid to the electrochemical deoxygenation device of the refrigerator 1. For example, the reaction container 500 can be provided with a liquid replenishment port 520, and the liquid supply port 262 of the second compartment 260 communicates with the liquid replenishment port 520 of the reaction container 500, allowing the liquid in the first liquid storage space 210 to flow sequentially through the liquid supply port 262 and the liquid replenishment port 520 into the reaction container 500. The reaction container 500 can be provided with a liquid level switch 600 for automatically opening and closing the liquid replenishment port 520 based on the liquid level in the reaction container 500.

In this embodiment, since the electrochemical reaction of the electrochemical deoxygenation device consumes water, the liquid in the first liquid storage space 210 can be directly water or can be an electrolytic solution. Since the electrolyte in the electrolytic solution carried by the oxygen dissolves in water, the liquid in the second liquid storage space 421 can also be directly water or can be an electrolytic solution.

Using the liquid storage device 20 in organic cooperation with the electrochemical deoxygenation device can automatically replenish water to the electrochemical deoxygenation device while removing acidic or alkaline components from the waste gases generated by the electrochemical deoxygenation device, recycling and reusing the electrolytes that would otherwise be lost. The entire process does not require operation by professionals or electronic components, making the system integrated, modular, and low-cost.

Since the liquid storage device 20 has filtering and recycling functions and can output liquid to the external environment through the liquid supply port 262, when the liquid storage device 20 is combined with the electrochemical deoxygenation device of the refrigerator 1, the gases discharged by the electrochemical deoxygenation device can be guided to the second liquid storage space 421. The specific substance components in the gases can be separated and recycled, and when the electrolytic solution in the electrochemical deoxygenation device is insufficient, the liquid in the first liquid storage space 210 can be used for replenishment. Therefore, the refrigerator 1 of this embodiment can solve the problems of liquid replenishment difficulties and electrolytic solution loss in the deoxygenation process.

In some optional embodiments, the liquid storage device 20 can also cooperate with other reaction devices 10, not limited to the electrochemical deoxygenation device in the above embodiments.

The liquid storage device 20 is independent of the reaction device 10, avoiding the risks associated with directly adding liquid to the reaction device 10.

Using the air guide tube and the housing 420 in cooperation, the gas can be filtered using water, avoiding the use of consumable filter materials and the need to replace filter materials, which helps save costs.

The design capacity of the liquid storage container 200 can meet the liquid replenishment needs of the reaction device 10 within a set time period.

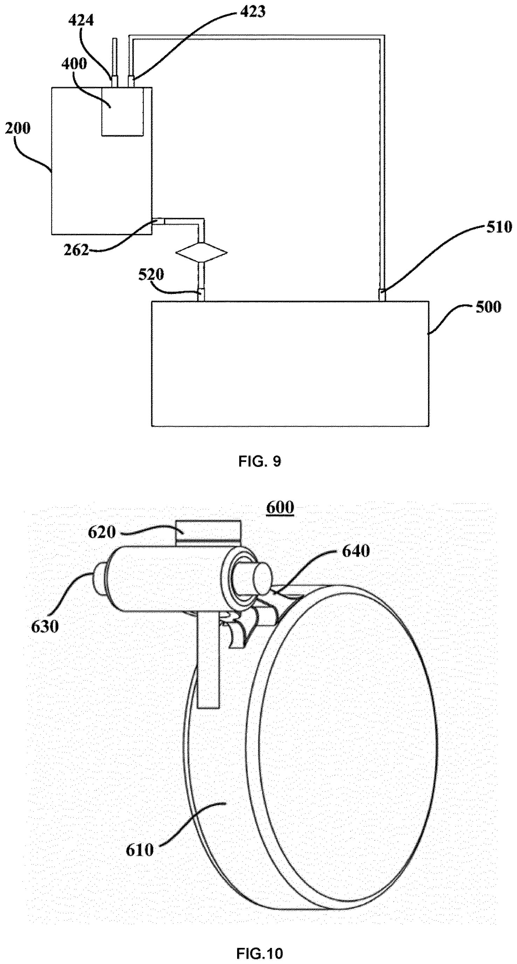

FIG. 9 is a schematic structural diagram of a reaction system according to one embodiment of the present disclosure. The reaction system generally includes a reaction device 10 and a liquid storage device 20 as described in any of the above embodiments. The reaction system of this embodiment can achieve waste gas filtration and recycling in the chemical reaction process.

As shown in FIG. 9, the liquid supply port 262 of the liquid storage container 200 communicates with the liquid replenishment port 520 of the reaction container 500 through a liquid delivery pipe, forming a liquid delivery channel through the first liquid storage space 210, the liquid supply port 262, the liquid replenishment port 520, and the internal space of the reaction container 500.

The liquid replenishment port 520 is lower than the liquid supply port 262 of the liquid storage container 200, allowing the liquid in the first liquid storage space 210 to flow downward to the liquid replenishment port 520 by gravity. The liquid replenishment port 520 is located at a top of the reaction container 500, preventing the reaction container 500 from leaking liquid.

The top of the reaction container 500 is also provided with an exhaust port 510, which communicates with the second liquid storage space 421 through an air pipe. One end of the air pipe is connected to the exhaust port 510, and the other end is connected to the air inlet hole 423 of the housing 420.

FIG. 10 is a schematic structural diagram of the liquid level switch 600 of the reaction system according to one embodiment of the present disclosure.

In some optional embodiments, the reaction system can further include a liquid level switch 600, which has a switch body 620 arranged in the reaction container 500 and is used to open and close the liquid replenishment port 520 based on the liquid level in the reaction container 500, allowing or preventing the liquid in the first liquid storage space 210 from entering the reaction container 500 through the liquid replenishment port 520. In other words, the liquid level switch 600 is used to control the opening and closing of the liquid replenishment port 520. The liquid level switch 600 acts as a gate for the liquid delivery channel, controlling the opening and closing of the liquid delivery channel. The switch body 620 of the liquid level switch 600 moves based on the liquid level in the reaction container 500 to close or open the liquid replenishment port 520, without the need for electronic control.

Since the liquid level switch 600 can automatically move based on the liquid level in the reaction container 500 to open and close the liquid replenishment port 520, controlling the liquid delivery channel, the reaction system of this embodiment has an automatic liquid replenishment function, without the need to add liquid to the reaction container 500 from the external environment.

The switch body 620 is movably arranged below the liquid replenishment port 520, and when the liquid level in the reaction container 500 rises, the switch body 620 rises to abut against a lower edge of the liquid replenishment port 520 to close the liquid replenishment port 520. When the liquid level in the reaction container 500 falls, the switch body 620 moves downward, away from the lower edge of the liquid replenishment port 520, opening the liquid replenishment port 520.

In other words, the switch body 620 rises in the reaction container 500 when the liquid level rises, abutting against the lower edge of the liquid replenishment port 520 to close it, preventing the liquid in the first liquid storage space 210 from passing through the liquid replenishment port 520. When the liquid level in the reaction container 500 falls, the switch body 620 moves downward, away from the liquid replenishment port 520, opening it and allowing the liquid in the first liquid storage space 210 to flow downward into the reaction container 500 by gravity.

The liquid level switch 600 also includes a float 610, fixedly connected to or integrated with the switch body 620, used to drive the switch body 620 to move through floating or sinking motion in the reaction container 500. In other words, the switch body 620 is "driven" by the float 610, and the power required for the float 610 to move is determined by the buoyancy it receives in the reaction container 500.

For example, a part of the float 610 is immersed in the liquid, allowing the float 610 to receive buoyancy from the liquid. When the liquid level in the internal space of the container changes, the buoyancy received by the float 610 also changes, altering the combined force of the buoyancy and gravity on the float 610. For example, when the liquid level in the reaction container 500 falls, the buoyancy received by the float 610 decreases, and if the combined force of the buoyancy and gravity on the float 610 is downward, the float 610 will move downward. Conversely, the float 610 will move upward. The float 610 can rise or fall in a vertical direction or along a curve.

In some optional embodiments, the float 610 can be arranged to rotate around an axis. That is, the float 610 of this embodiment does not move up and down in a straight line but rotates around an axis to move up or down. This design only requires the float 610 to be pivotally connected to a fixed axis, without needing high-precision guide components, making the structure compact, the assembly process simple, and the device reliable.

Since the float 610 can be arranged to rotate around an axis, its movement trajectory is clear and definite, making the float 610 and the switch body 620 of this embodiment easy to move along a clear and definite trajectory, improving the reliability of the liquid level switch 600 and reducing or avoiding sealing problems caused by the free movement of the float 610.

The liquid level switch 600 can also further include a rotating shaft 630 and a connecting piece 640.

The rotating shaft 630 is fixed to the reaction container 500. For example, the rotating shaft 630 can be fixed to the internal space of the reaction container 500 and is fixedly connected to an inner wall of the reaction container 500.

In some optional embodiments, the rotating shaft 630 can also be detachably fixed to the reaction container 500, allowing the height of the rotating shaft 630 to be adjusted as needed, thereby adjusting the starting liquid level height for replenishment.

The connecting piece 640 is fixedly connected to or integrated with the float 610, forming a shaft hole for the rotating shaft 630 to be inserted into and rotatably fit, achieving a rotatable connection. In other words, the connecting piece 640 assembles the rotating shaft 630 and the float 610 into an integrated whole, allowing the float 610 to rotate around the rotating shaft 630.

By forming the shaft hole in the connecting piece 640 and rotatably fitting the rotating shaft 630 into the shaft hole, the float 610 can be rotatably assembled to the rotating shaft 630, making the structure ingenious and the process simple.

The switch body 620 is rod-shaped. The connecting piece 640 also forms an assembly opening for a part of the switch body 620 to be inserted into and fixedly assembled. In other words, a part of the switch body 620 is fixedly assembled to the connecting piece 640, indirectly achieving a fixed connection with the float 610. For example, a part of the switch body 620 can be assembled to the assembly opening of the connecting piece 640 through an interference fit.

By respectively assembling the rotating shaft 630 and the switch body 620 to the connecting piece 640, which is fixedly connected to or integrated with the float 610, a liquid level switch 600 is formed with strong structural integrity.

The liquid storage device 20 with filtering and recycling functions and the refrigerator 1 having the same provided by the present disclosure, due to the filtering mechanism 400 of the liquid storage device 20, wherein the housing 420 of the filtering mechanism 400 forms a second liquid storage space 421 communicating with the first liquid storage space 210 of the liquid storage container 200, and the filtering portion 440 of the filtering mechanism 400 is used for dissolving specific substance components in the gases from the external environment into the second liquid storage space 421, so that specific substance components in the gases enter the first liquid storage space for recovery, therefore, the present disclosure provides a liquid storage device 20 with filtering and recycling functions, allowing specific substance components in the gases to be separated and recycled, thereby reducing or avoiding pollution caused by gas discharge while improving resource utilization efficiency.

In some embodiments, the reaction device 10 can be an electrochemical deoxygenation device, so the reaction system formed by the electrochemical deoxygenation device and the liquid storage device 20 is an electrochemical deoxygenation system.

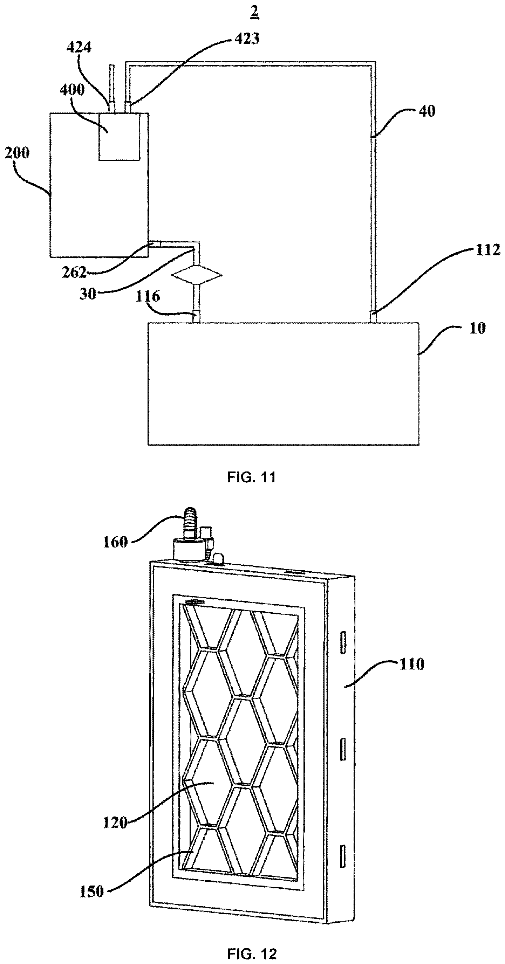

The present disclosure also provides an electrochemical deoxygenation system for a refrigerator. FIG. 11 is a schematic structural diagram of an electrochemical deoxygenation system 2 for a refrigerator 1 according to one embodiment of the present disclosure. The electrochemical deoxygenation system 2 generally includes an electrochemical deoxygenation device 10 and a liquid storage device 20.

In this embodiment, the electrochemical deoxygenation device 10 is organically combined with the liquid storage device 20 to form the electrochemical deoxygenation system 2, which can solve the problems of liquid replenishment difficulties, high safety risks, exhaust gas pollution, and electrolyte loss in the deoxygenation process. To a certain extent, it can ensure the continuous deoxygenation process, promote the application of the electrochemical deoxygenation device 10 in the field of refrigerators 1, and improve the preservation performance of refrigerators 1.

The electrochemical deoxygenation device 10 has a reaction container 110, and the interior of the reaction container 110 of the electrochemical deoxygenation device 10 forms a reaction site for consuming oxygen through electrochemical reactions. The electrochemical reaction uses oxygen as a reactant and is carried out inside the reaction container 110 of the electrochemical deoxygenation device 10. For example, the interior of the reaction container 110 of the electrochemical deoxygenation device 10 can hold an electrolytic solution, and the electrochemical elements of the electrochemical deoxygenation device 10 can be immersed in the electrolytic solution to carry out the electrochemical reaction. The reaction container 110 is provided with a liquid replenishment port 116, which forms an opening that communicates the interior and exterior spaces of the reaction container 110.

The liquid storage device 20 has a liquid storage container 200, and the interior of the liquid storage container 200 forms a liquid storage space (also referred to as the first liquid storage space) 210. The liquid storage container 200 is provided with a liquid supply port 262 communicating with the liquid replenishment port 116 for supplying liquid to the reaction container 110. In other words, the liquid storage container 200 acts as a replenishment tank for the reaction container 110, supplying liquid to the reaction container 110.

Since the electrochemical deoxygenation system 2 has a liquid storage device 20 for supplying liquid to the reaction container 110 of the electrochemical deoxygenation device 10, this embodiment of the electrochemical deoxygenation system 2 integrates both deoxygenation and liquid replenishment functions. It can use its own liquid storage device 20 to replenish the reaction container 110, reducing the difficulty of liquid replenishment for the electrochemical deoxygenation device 10. The liquid replenishment process for the electrochemical deoxygenation device 10 is safer, more effective, and timely, further ensuring the deoxygenation effect of the electrochemical deoxygenation device 10.

In some optional embodiments, the liquid supply port 262 is located at the bottom section of the liquid storage container 200. The liquid replenishment port 116 is located at the top section of the reaction container 110. The liquid supply port 262 is higher than the liquid replenishment port 116. When the liquid supply port 262 and the liquid replenishment port 116 are both open, a liquid delivery channel can be formed between the liquid storage container 200 and the reaction container 110, allowing the liquid in the liquid storage container 200 to flow sequentially through the liquid supply port 262 and the liquid replenishment port 116 into the reaction container 110, thereby completing the liquid replenishment process.

Since the liquid supply port 262 of the liquid storage container 200 is higher than the liquid replenishment port 116 of the reaction container 110, the liquid from the liquid storage container 200 can enter the reaction container 110 by gravity, making the liquid replenishment process of the electrochemical deoxygenation system 2 automatic through mechanical structures, reducing electronic control costs, and improving the degree of automation.

The electrochemical deoxygenation system 2 can further include a liquid delivery pipe 30, with one end communicating with the liquid supply port 262 and the other end communicating with the liquid replenishment port 116, for guiding the liquid from the liquid supply port 262 to the liquid replenishment port 116.

Using the liquid delivery pipe 30 to connect the liquid supply port 262 and the liquid replenishment port 116 ensures a smooth liquid replenishment process and allows the distance between the liquid storage device 20 and the electrochemical deoxygenation device 10 to be appropriately extended. For example, the liquid storage device 20 can be placed in a position accessible to personnel, facilitating maintenance or liquid replenishment for the liquid storage container 200 by users or engineers.

In this embodiment, since the electrochemical reaction of the electrochemical deoxygenation device 10 consumes water, the liquid in the liquid storage container 200 can be directly water or an electrolytic solution. Since the electrolyte in the electrolytic solution carried by the oxygen dissolves in water, the liquid inside the housing 420 can also be directly water or an electrolytic solution.

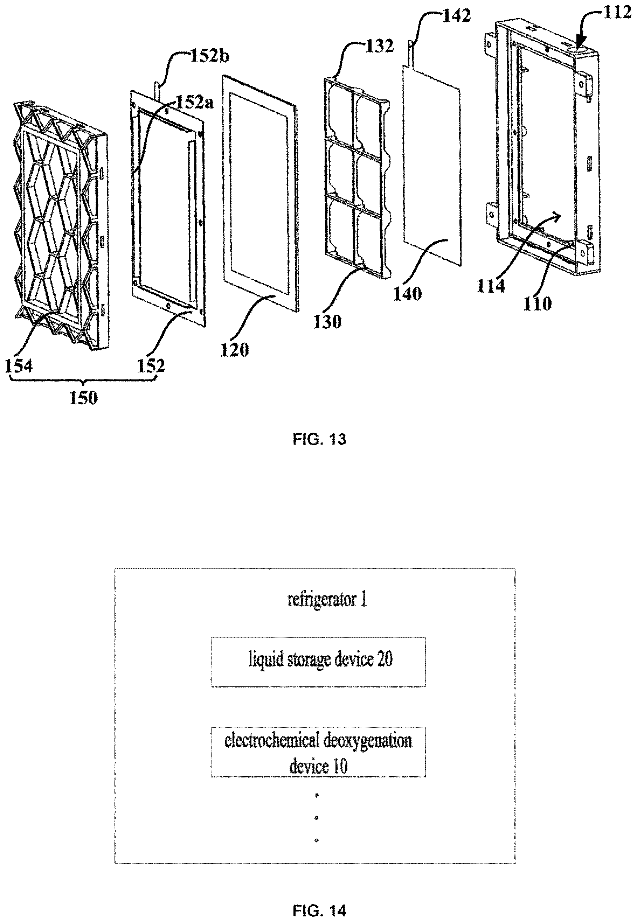

FIG. 12 is a schematic structural diagram of the electrochemical deoxygenation device 10 of the electrochemical deoxygenation system 2 for a refrigerator 1 according to one embodiment of the present disclosure. FIG. 13 is a schematic exploded view of the electrochemical deoxygenation device 10 of the electrochemical deoxygenation system 2 for a refrigerator 1 shown in FIG. 12. The electrochemical deoxygenation device 10 generally includes the reaction container 110, an anode plate 140, and a cathode plate 120. This embodiment only illustrates the structure of the electrochemical deoxygenation device 10 and should not be considered as limiting the structure of the electrochemical deoxygenation device 10.

The reaction container 110 can be box-shaped. The reaction container 110 can be provided with a lateral opening 114.

The cathode plate 120 is arranged at the lateral opening 114, forming a liquid storage chamber with the reaction container 110 to hold the electrolytic solution and configured to consume the oxygen in a storage space 210 of the refrigerator 1 through electrochemical reactions. The lateral opening 114 can communicate with the storage space of the refrigerator 1, allowing the cathode plate 120 to be in airflow communication with the storage space. The oxygen in the air can undergo a reduction reaction at the cathode plate 120, namely: O₂ + 2H₂O + 4e⁻ → 4OH⁻.

For example, one wall of the reaction container 110 can be opened to form the lateral opening 114. The cathode plate 120 of this embodiment can directly serve as the lateral wall of the reaction container 110 to seal the liquid storage chamber. The liquid storage chamber of the electrochemical deoxygenation device 10 can hold an alkaline electrolytic solution, such as 1mol/L NaOH, with the concentration adjustable as needed.

The anode plate 140 is arranged in the liquid storage chamber and configured to provide reactants to the cathode plate 120 through electrochemical reactions and generate oxygen. For example, the OH⁻ generated by the cathode plate 120 can undergo an oxidation reaction at the anode plate 140 to generate oxygen, namely: 4OH⁻ → O₂ + 2H₂O + 4e⁻. The anode plate 140 is provided with an anode power supply terminal 142 to connect to an external power source.

The reaction container 110 is also provided with an exhaust port 112 for allowing the gas generated in the reaction container 110 to be discharged into the internal space of the housing below. In this embodiment, the anode plate 140 generates oxygen during the electrochemical reaction, and the exhaust port allows the oxygen generated by the anode plate 140 to be discharged. The exhaust port 112 can be arranged near the top of the reaction container 110, which can reduce or prevent electrolytic solution leakage. In some embodiments, an exhaust pipe 160 can be connected to the exhaust port 112, which can communicate with a gas delivery pipe 40.

In some embodiments, the electrochemical deoxygenation device 10 can further include a separator 130 and a fixing assembly 150. The separator 130 is arranged in the liquid storage chamber between the cathode plate 120 and the anode plate 140 to prevent short circuits in the electrochemical deoxygenation device 10. Specifically, the separator 130 is provided with multiple protrusions 132 on the side facing the anode plate 140. The protrusions 132 abut against the anode plate 140, and the cathode plate 120 rests against the side of the separator 130 opposite the protrusions 132, forming a preset gap between the cathode plate 120 and the anode plate 140, thereby separating the cathode plate 120 from the anode plate 140.

The fixing assembly 150 can be arranged on an outer side of the cathode plate 120 to fix the cathode plate 120 at the lateral opening 114 of the reaction container 110. Specifically, the fixing assembly 150 can include a metal frame 152 and a support member 154. The metal frame 152 abuts against the outer side of the cathode plate 120. The metal frame 152 directly contacts the cathode plate 120, pressing the cathode plate 120, and can be provided with a cathode power supply terminal 152b on the metal frame 152 to connect to an external power source. The support member 154 forms an insertion slot. When an enclosing part 152a of the metal frame 152 enters the insertion slot of the support member 154, the metal frame 152 can be fixed and positioned by the support member 154, thereby pressing the cathode plate 120 with the metal frame 152.

In some embodiments, the electrochemical deoxygenation system 2 also includes a filtering mechanism 400 with a housing 420 and a filtering portion 440. The structure of the filtering mechanism 400 is shown in FIGS. 4 and 5. An internal space of the housing 420 (also referred to as the second liquid storage space) 421 communicates with the liquid storage space 210. The filtering portion 440 is arranged in the internal space 421 of the housing 420 to dissolve specific substance components in the gases from the exhaust port 112 into the internal space 421 of the housing 420, so that specific substance components in the gases enter the liquid storage space 210 for recovery. In other words, the gases discharged from the exhaust port 112 can be filtered by the filtering portion 440 to separate specific substance components, which are retained in the internal space 421 of the housing 420. The internal space 421 of the housing 420 forms a space for holding liquid, which can contain an electrolytic solution with specific components or water, etc. The specific substance components in the gases discharged by the reaction container 110 can dissolve in the internal space 421 of the housing 420, meaning they dissolve in the liquid held in the reaction container 110.

Since the filtering mechanism 400 can dissolve specific substance components in the gases discharged by the electrochemical deoxygenation device 10 into the internal space 421 of the housing 420, the gases to be discharged are filtered, reducing the corrosiveness of the gases discharged by the electrochemical deoxygenation device 10 and the adverse environmental impact of the deoxygenation process.

Additionally, since the housing 420 of the filtering mechanism 400 communicates with the liquid storage space 210, the specific substance components dissolved in the housing 420 can enter the liquid storage space 210, allowing the specific substance components in the gases discharged by the electrochemical deoxygenation device 10 to be recycled and reused, reducing resource consumption in the deoxygenation process.

The specific substance components are water-soluble substances. In some optional embodiments, the liquid components stored in the housing 420 and the liquid storage container 200 can be adjusted according to the physical and chemical properties of the specific substance components to be separated.

Referring to FIGS. 1 to 3, for the connection between the housing 420 and the liquid storage space 210, in some optional embodiments, the housing 420 is inserted into the liquid storage space 210, and the bottom of the housing 420 is provided with a liquid outlet hole to communicate with the liquid storage space 210, allowing the liquid in the housing 420 to flow back into the liquid storage container 200. For example, the liquid storage container 200 can be generally rectangular, and the housing 420 can be inserted into the liquid storage container 200 as an inner sleeve. The shapes of the liquid storage container 200 and the housing 420 mentioned here are merely illustrative and can be easily extended by those skilled in the art, so they are not listed one by one here.

The liquid outlet hole 422 serves as a "window" for material exchange between the internal space 421 of the housing 420 and the internal space of the liquid storage container 200 (i.e., the liquid storage space 210). The liquid outlet hole 422 can keep the liquid level in the internal space 421 of the housing 420 consistent with the liquid level in the internal space of the liquid storage container 200 and make it easy for the liquid in the housing 420 to diffuse into the liquid storage container 200.

Since the housing 420 is arranged in the internal space of the liquid storage container 200 and communicates with the liquid storage container 200 through the liquid outlet hole 422 at the bottom of the housing 420, the liquid in the housing 420 can flow downward through the liquid outlet hole 422 by gravity and return to the liquid storage container 200, making the recovery process simple and effective.

The housing 420 is provided with an air inlet hole 423 for communicating the exhaust port 112 with the internal space 421 of the housing 420. The electrochemical deoxygenation system 2 can further include a gas delivery pipe 40, with one end communicating with the exhaust port 112 and the other end communicating with the air inlet hole 423, for guiding the gases from the exhaust port 112 to the air inlet hole 423.

Using the gas delivery pipe 40 to connect the exhaust port 112 and the air inlet hole 423 simplifies the connection structure of the gas delivery channel between the exhaust port 112 and the air inlet hole 423 and improves the flexibility of the assembly process.

In some optional embodiments, the filtering portion 440 is an air guide tube inserted into the internal space 421 of the housing 420 through the air inlet hole 423 and extending to the bottom section of the housing 420 to guide the gases from the exhaust port 112 to the bottom section of the housing 420. The specific substance components in the gases from the exhaust port 112 dissolve in the internal space 421 of the housing 420 during the ascent. The air guide tube of this embodiment can be a straight tube with both ends open to facilitate gas entry and exit, having a simple structure and providing an optimal gas guiding effect.

Extending the air guide tube to the bottom section of the housing 420 allows the air guide tube to deliver the gases to the depth of the liquid in the housing 420, thus extending the flow path of the gas in the housing 420. The gases exiting the air guide tube can fully contact the liquid in the housing 420 during the ascent, allowing the specific substance components in the gases to dissolve in the housing 420. This enables the electrochemical deoxygenation system 2 to achieve optimal filtering, purification, and recycling effects with a compact and simple structure.

In some optional embodiments, the shape of the air guide tube can be changed to a vertical hook-shaped tube, having a straight tube section extending to the bottom section of the housing 420 and a bent tube section extending upward from the end of the straight tube section. The end of the bent tube section is slightly higher than the end of the straight tube section, guiding the gases flowing through it upward. The straight tube section resembles an umbrella rod, and the bent tube section resembles an umbrella handle connected to the end of the umbrella rod. Extending the bent tube end upward from the end of the straight tube section guides the gases exiting the air guide tube to flow upward, making the gas flow direction more definite. The end of the bent tube section being slightly higher than the end of the straight tube section means that the end of the bent tube section is still in the bottom section of the housing 420, which does not significantly shorten the flow path of the gas during the dissolution process.

The housing 420 is also provided with an air outlet hole 424, spaced apart from the air inlet hole 423 and located at the top of the housing 420, for discharging the gases that have flowed through the air guide tube and the internal space of the housing 420 and have been separated from specific substance components. The air outlet hole 424 is used to discharge the filtered gases to the external environment, such as to the air in the external environment.

In some embodiments, the air inlet hole 423 and the air outlet hole 424 can be located on the top cover of the housing 420 (i.e., the first cover 428 below). The air inlet hole 423 and the air outlet hole 424 can be circular openings. The air inlet hole 423 and the air outlet hole 424 of this embodiment can be tubular through-holes. The air guide tube and the air inlet hole 423 can be integrated. The wall of the air inlet hole 423 can extend downward continuously and insert into the housing, acting as the air guide tube. In some embodiments, an air outlet pipe can be connected to the air outlet hole 424 to guide the gases.

In some optional embodiments, the housing 420 can be integrally formed. In other optional embodiments, the housing 420 can be connected by multiple different parts. For example, the housing 420 can include a first compartment 426 with a top opening and a first cover 428 closing the top opening of the first compartment 426. The air inlet hole 423 and the air outlet hole 424 are spaced apart on the first cover 428. The first compartment 426 can be a straight tube with a diameter larger than that of the air guide tube. The top end of the first compartment 426 is open and is sealedly connected to the first cover 428. The bottom end of the first compartment 426 is closed and is provided with the aforementioned liquid outlet hole 422, which can be at least one.

The air inlet hole 423, along with the air guide tube and the air outlet hole 424, is covered by the first compartment 426, forming a sleeve structure. The bottom end of the air guide tube is higher than the bottom end of the first compartment 426 to prevent the gases exiting the air guide tube from escaping out of the first compartment 426.

In some optional embodiments, the liquid storage container 200 can be integrally formed, which helps improve the sealing effect of the liquid storage container 200, preventing leakage. In other optional embodiments, the liquid storage container 200 can be assembled from multiple different parts. For example, the liquid storage container 200 can include a second compartment 260 with a top opening and a second cover 280 sealing the top opening of the second compartment 260. The second compartment 260 can be an open rectangular water tank, with a volume larger than that of the first compartment 426.

Referring to FIG. 6, the second cover 280 has a mounting opening 282. The wall of the mounting opening 282 extends upward to form a hollow cylindrical external threaded interface 288. Since the external threaded interface 288 extends upward from the wall of the mounting opening 282, the upper edge of the external threaded interface 288 is higher than the upper surface of the second cover 280, and also higher than the upper edge of the following liquid filling groove 286. This controls the maximum liquid level during the filling process below the upper edge of the external threaded interface 288.

The first cover 428 has a sealing plate 428a located above the first compartment 426 and an annular internal threaded interface 428b extending downward from the outer edge of the sealing plate 428a. The sealing plate 428a is used to cover the top opening of the first compartment 426. The annular internal threaded interface 428b engages with the external threaded interface 288, allowing the first cover 428 to be detachably connected to the second cover 280. In other words, the annular internal threaded interface 428b is used to connect the first cover 428 to the second cover 280.

The first compartment 426 extends downward from the lower surface of the sealing plate 428a, passes through the external threaded interface 288, and is inserted into the liquid storage container 200.

Using the first cover 428 to screw onto the second cover 280 to seal the mounting opening 282 simplifies the installation and fixation process of the filtering mechanism 400, achieving one-step installation, and also allows the first compartment 426 to function as an "air isolation pipe."

The filtering and recycling process of the electrochemical deoxygenation system 2 for the refrigerator 1 in this embodiment is similar to the filtering and recycling process of the liquid storage device 20, as shown in FIG. 7. The direction of the arrows in the figure indicates the flow direction of the gas or liquid. Due to the limitation of the housing 420 as an "air isolation pipe," the gas exiting the air guide tube can only rise inside the first compartment 426 in the form of bubbles until it reaches the air outlet hole 424 of the first cover 428 located above the first compartment 426 and is discharged, completing the filtering process. In some optional embodiments, the above screw-tightened installation method can also be replaced with an interference fit or sealing connection using sealing rings, as long as it ensures no leakage and airtightness.

When the gas discharged from the exhaust port 112 contains soluble acidic or alkaline substances, these specific substance components are filtered and retained in the first compartment 426 and gradually diffuse into the liquid in the second compartment 260 through the liquid outlet hole 422 at the bottom of the first compartment 426. The first compartment 426 can act as a replenishment tank, with its internal liquid being transported to the reaction container 110 for reuse through replenishment.

In some optional embodiments, the second cover 280 can be provided with a filling opening 284, with the wall extending downward to form a liquid filling groove 286. Since the liquid filling groove 286 extends downward from the upper surface of the second cover 280, and the external threaded interface 288 extends upward from the upper surface of the second cover 280, when liquid is added to the second compartment 260 through the filling opening 284, even if the filling process causes the second compartment 260 to overflow, the liquid level during overflow will not exceed the upper edge of the external threaded interface 288.

A part of the wall of the liquid filling groove 286 extends downward obliquely downward, forming a gradually narrowing opening at the bottom of the liquid filling groove 286. In other words, the liquid filling groove is an inclined through-hole of a certain depth, allowing users to observe the liquid level during filling. The inclined downward extending wall of the groove has liquid level markings to indicate the liquid level during filling. For example, the liquid level markings can be designed as a "maximum liquid level line" to remind users that the liquid is full.

A liquid supply port 262 is located at the bottom section of the second compartment 260, allowing the liquid in the second compartment 260 to flow out automatically by gravity, improving the automation of the liquid supply process.

In some optional embodiments, the edge of the second cover 280 has a protrusion 287 for applying force. Users can apply force to the second cover 280 through actions such as grasping, facilitating the assembly and disassembly process between the second cover 280 and the second compartment 260.

An elastic sealing ring can be provided at the periphery of the closure between the second cover 280 and the second compartment 260, facilitating sealing through the pressing fit between the second cover 280 and the second compartment 260, preventing leakage from the second compartment 260.

FIG. 14 is a schematic block diagram of a refrigerator 1 according to another embodiment of the present disclosure. The refrigerator 1 generally includes an electrochemical deoxygenation system 2 as described in any of the above embodiments and may further include a cabinet. The internal space of the cabinet forms a storage space. The electrochemical deoxygenation device 10 is in airflow communication with the storage space, allowing the electrochemical deoxygenation device 10 to consume the oxygen in the storage space through electrochemical reactions. The cathode plate 120 of the electrochemical deoxygenation device 10 is in airflow communication with the storage space, for example, the cathode plate can be arranged facing the storage space or can be connected to the storage space through a connecting pipe.

Using the liquid storage device 20 and the electrochemical deoxygenation device 10 in organic cooperation can automatically replenish water to the electrochemical deoxygenation device 10, while removing acidic or alkaline components from the waste gas generated by the electrochemical deoxygenation device 10, recycling and reusing the electrolytes that would otherwise be lost. The entire process does not require operation by professionals or electronic components, making the system integrated, modular, and low-cost.

The liquid storage device 20 is independent of the electrochemical deoxygenation device 10, avoiding the risks associated with directly adding liquid to the electrochemical deoxygenation device 10. The design capacity of the liquid storage container 200 can meet the liquid replenishment needs of the electrochemical deoxygenation device 10 within a set time period. Using the air guide tube and the housing 420 in cooperation, the gas can be filtered using water, avoiding the use of consumable filter materials and the need to replace filter materials, helping save costs.

In some optional embodiments, the electrochemical deoxygenation system 2 can further include a liquid level switch 600, as shown in FIG. 10. The liquid level switch 600 is arranged in the reaction container 110 and has a switch body 620, used to open and close the liquid replenishment port 116 based on the liquid level in the reaction container 110, allowing or preventing the liquid in the liquid storage container 200 from flowing through the liquid supply port 262 and the liquid replenishment port 116 into the reaction container 110. In other words, the liquid level switch 600 is used to control the opening and closing of the liquid replenishment port 116. The liquid level switch 600 acts as a gate for the liquid delivery channel, controlling the opening and closing of the liquid delivery channel. The switch body 620 of the liquid level switch 600 moves based on the liquid level in the reaction container 110 to close or open the liquid replenishment port 116, without the need for electronic control.

Since the liquid level switch 600 can automatically move based on the liquid level in the reaction container 110 to open and close the liquid replenishment port 116, controlling the liquid delivery channel, the electrochemical deoxygenation system 2 of this embodiment has an automatic liquid replenishment function, without the need to add liquid to the reaction container 110 from the external environment.

The switch body 620 is movably arranged below the liquid replenishment port 116 and, when the liquid level in the reaction container 110 rises, it rises to abut against the lower edge of the liquid replenishment port 116 to close the liquid replenishment port 116. When the liquid level in the reaction container 110 falls, it moves downward, away from the lower edge of the liquid replenishment port 116, opening the liquid replenishment port 116.

In other words, the switch body 620 rises in the reaction container 110 when the liquid level rises, abutting against the lower edge of the liquid replenishment port 116 to close it, preventing the liquid in the liquid storage container from passing through the liquid replenishment port 116. When the liquid level in the reaction container 110 falls, the switch body 620 moves downward, away from the liquid replenishment port 116, opening it and allowing the liquid in the liquid storage container to flow downward into the reaction container 110 by gravity.

The liquid level switch 600 also includes a float 610, fixedly connected to or integrated with the switch body 620, arranged to rotate around an axis to float or sink in the reaction container 110, thereby driving the switch body 620 to move. In other words, the switch body 620 is "driven" by the float 610, with the movement of the float 610 driven by the buoyancy it receives in the reaction container 110.

For example, part of the float 610 is immersed in the liquid, causing the float 610 to receive the buoyancy of the liquid. When the liquid level in the internal space of the reaction container 110 changes, the buoyancy received by the float 610 also changes, altering the combined force of the buoyancy and gravity on the float 610. For example, when the liquid level in the reaction container 110 falls, the buoyancy received by the float 610 decreases, and if the combined force of the buoyancy and gravity on the float 610 is downward, the float 610 will move downward. Conversely, the float 610 will move upward.

The float 610 in this embodiment does not move up and down in a straight line but rotates around an axis to move up or down. This design only requires the float 610 to be pivotally connected to a fixed axis, without needing high-precision guide components, making the structure compact, the assembly process simple, and the device reliable.

Since the float 610 can be arranged to rotate around an axis, its movement trajectory is clear and definite, making the float 610 and the switch body 620 of this embodiment easy to move along a clear and definite trajectory, improving the reliability of the liquid level switch 600 and reducing or avoiding sealing problems caused by the free movement of the float 610.

The liquid level switch 600 can also further include a rotating shaft 630 and a connecting piece 640.

The rotating shaft 630 is fixed to the reaction container 110. For example, the rotating shaft 630 can be fixed to the internal space of the reaction container 110 and is fixedly connected to the inner wall of the reaction container 110.

In some optional embodiments, the rotating shaft 630 can also be detachably fixed to the reaction container 110, allowing the height of the rotating shaft 630 to be adjusted as needed, thereby adjusting the starting liquid level height for replenishment.

The connecting piece 640 is fixedly connected to or integrated with the float 610, forming a shaft hole for the rotating shaft 630 to be inserted into and rotatably fit, achieving a rotatable connection. In other words, the connecting piece 640 assembles the rotating shaft 630 and the float 610 into an integrated whole, allowing the float 610 to rotate around the rotating shaft 630.

By forming a shaft hole in the connecting piece 640 and rotatably fitting the rotating shaft 630 into the shaft hole, the float 610 can be rotatably assembled to the rotating shaft 630, making the structure ingenious and the process simple.

The switch body 620 is rod-shaped. The connecting piece 640 also forms an assembly opening for a part of the switch body 620 to be inserted into and fixedly assembled. In other words, a part of the switch body 620 is fixedly assembled to the connecting piece 640, indirectly achieving a fixed connection with the float 610. For example, a part of the switch body 620 can be assembled to the assembly opening of the connecting piece 640 through an interference fit.

By respectively assembling the rotating shaft 630 and the switch body 620 to the connecting piece 640, which is fixedly connected to or integrated with the float 610, a liquid level switch 600 is formed with strong structural integrity.

The electrochemical deoxygenation system 2 for a refrigerator 1 and the refrigerator 1 having the same, due to the electrochemical deoxygenation system 2 having a liquid storage device 20 for replenishing the reaction container 110 of the electrochemical deoxygenation device 10, the electrochemical deoxygenation system 2 of the present disclosure integrates both deoxygenation and liquid replenishment functions, utilizing its own liquid storage device 20 to replenish the reaction container 110. This reduces the difficulty of liquid replenishment for the electrochemical deoxygenation device 10, making the liquid replenishment process safer, more effective, timely, and intelligent, further ensuring the deoxygenation effect of the electrochemical deoxygenation device 10.

Thus, those skilled in the art should recognize that while the present disclosure has been described in detail with reference to multiple exemplary embodiments, many other variations or modifications consistent with the principles of the present disclosure can be directly determined or derived without departing from the spirit and scope of the present disclosure. Therefore, the scope of the present disclosure should be understood and recognized to cover all such other variations or modifications.

## Claims

1. A liquid storage device with filtering and recycling functions, comprising:
a liquid storage container, forming a first liquid storage space inside; and
a filtering mechanism, having a housing and a filtering portion, wherein the housing forms a second liquid storage space communicating with the first liquid storage space and the filtering portion is arranged in the second liquid storage space and used for dissolving specific substance components in gases from the external environment into the second liquid storage space , so that specific substance components in gases enter the first liquid storage space for recovery.

2. The liquid storage device according to claim 1, wherein:
the housing is inserted into the first liquid storage space , and its bottom is provided with a liquid outlet hole communicating with the first liquid storage space, allowing the liquid in the second liquid storage space to flow to the first liquid storage space.

3. The liquid storage device according to claim 1 or 2, wherein:
the housing is also provided with an air inlet hole for introducing gases from the external environment; and
the filtering portion is an air guide tube inserted into the second liquid storage space through the air inlet hole and extending to a bottom section of the second liquid storage space, guiding the gases from the external environment to the bottom section of the second liquid storage space so that specific substance components in the gases from the external environment are dissolved in the second liquid storage space during the gas ascent.

4. The liquid storage device according to claim 3, wherein:
the air guide tube is a straight tube; or
the air guide tube is a vertical hook-shaped tube, having a straight tube section extending to the bottom section of the second liquid storage space and a bent tube section extending upward from an end of the straight tube section, with an end of the bent tube section slightly higher than the end of the straight tube section, guiding the gases flowing through it upward.

5. The liquid storage device according to claim 3, wherein:
the housing is also provided with an air outlet hole at a top of the housing, for discharging gases that have flowed through the air guide tube and the second liquid storage space and have been separated from the specific substance components.

6. The liquid storage device according to claim 5, wherein:
the housing comprises a first compartment with a top opening and a first cover closing the top opening of the first compartment, and the air inlet hole and the air outlet hole are spaced apart on the first cover.

7. The liquid storage device according to claim 6, wherein:
the liquid storage container comprises a second compartment with a top opening and a second cover closing the top opening of the second compartment; and the second cover is provided with an installation opening ; a wall of the installation opening extends upward to form a hollow cylindrical external threaded interface ;
the first cover has a sealing cover plate above the first compartment and an annular internal threaded interface extending downward from an outer edge of the sealing cover plate, the annular internal threaded interface being screwed to the external threaded interface, so that the first cover is detachably connected to the second cover; and
the first compartment extends downward from a lower surface of the sealing cover plate, passes through the external threaded interface, and is inserted into the first liquid storage space.

8. The liquid storage device according to claim 7, wherein:
the second cover is also provided with a liquid filling port, a wall of which extends downward to form a liquid filling groove; a part of the wall of the liquid filling groove extends downward obliquely, making a bottom of the liquid filling groove form a gradually narrowing opening.

9. The liquid storage device according to claim 1 or 2, wherein:
a bottom section of the liquid storage container is provided with a liquid supply port for outputting liquid to the external environment.

10. An electrochemical deoxygenation system for a refrigerator, comprising:
an electrochemical deoxygenation device, having a reaction container an interior of which forms a reaction site for consuming oxygen through electrochemical reactions; and the reaction container is provided with a liquid replenishment port; and
the liquid storage device according to any of claims 1-9, wherein the liquid storage container of the liquid storage device is provided with a liquid supply port communicating with the liquid replenishment port for supplying liquid to the reaction container.

11. The electrochemical deoxygenation system according to claim 10, wherein:
the liquid supply port is located at a bottom section of the liquid storage container, and the liquid replenishment port is located at a top section of the reaction container; and
the liquid supply port is higher than the liquid replenishment port.

12. The electrochemical deoxygenation system according to claim 10, further comprising:
a liquid delivery pipe, one end of which communicates with the liquid supply port, and the other end of which communicates with the liquid replenishment port, for guiding liquid from the liquid supply port to the liquid replenishment port.

13. The electrochemical deoxygenation system according to claim 10, wherein:
the reaction container is also provided with an exhaust port for allowing gases generated in the reaction container to be discharged into the interior space of the housing of the filtering mechanism; and
the filtering portion is used to dissolve specific substance components in the gases from the exhaust port into the interior space of the housing, so that specific substance components enter the first liquid storage space for recovery.

14. The electrochemical deoxygenation system according to claim 13, wherein:
the housing is provided with an air inlet hole communicating the exhaust port with the interior space of the housing; and
the electrochemical deoxygenation system further comprises an air delivery pipe, one end of which communicates with the exhaust port, and the other end of which communicates with the air inlet hole , for guiding gases from the exhaust port to the air inlet hole .

15. The electrochemical deoxygenation system according to claim 14, wherein:
the filtering portion is an air guide tube inserted into the interior space of the housing through the air inlet hole and extending to a bottom section of the housing , for guiding gases from the exhaust port to the bottom section of the housing, so that specific substance components in the gases from the exhaust port are dissolved in the interior space of the housing during the ascent; and
the housing is also provided with an air outlet hole, spaced apart from the air inlet hole at a top of the housing, for discharging gases that have flowed through the air guide tube and the interior space of the housing and have been separated from the specific substance components.

16. The electrochemical deoxygenation system according to claim 13, wherein:
the housing is inserted into the liquid storage space, and its bottom is provided with a liquid outlet hole communicating with the first liquid storage space, allowing the liquid in the housing to flow to the liquid storage container.

17. The electrochemical deoxygenation system according to claim 10, further comprising:
a liquid level switch , arranged in the reaction container, having a switch body, for opening and closing the liquid replenishment port according to the liquid level in the reaction container, to allow or prevent the electrolytic solution in the liquid storage container from flowing through the liquid supply port and the liquid replenishment port into the reaction container sequentially.

18. The electrochemical deoxygenation system according to claim 17, wherein:
the liquid level switch further comprises a float, fixedly connected to the switch body or integrated with the switch body, and rotatably arranged around an axis , for achieving upward or downward movement through rotation around the axis in the reaction container, thereby driving the switch body to move.

19. A refrigerator, comprising:
the electrochemical deoxygenation system according to any of claims 10-18, wherein the electrochemical deoxygenation device is in airflow communication with a storage space of the refrigerator, so that the electrochemical deoxygenation device consumes the oxygen in the storage space of the refrigerator through electrochemical reactions.
